## Europäisches Patentamt

## European Patent Office

## Office européen des brevets

(19)

(11) Veröffentlichungsnummer: **0 205 910**
**B1**

(12)

# EUROPÄISCHE PATENTSCHRIFT

(45) Veröffentlichungstag der Patentschrift:
**19.04.89**

(51) Int. Cl.⁴: **C08F 2/10, C08F 2/34**

(21) Anmeldenummer: **86106760.1**

(22) Anmeldetag: **17.05.86**

(54) **Verfahren zur Herstellung von pulverförmigen wasserlöslichen Polymerisaten und deren Verwendung.**

(30) Priorität: **25.05.85 DE 3519013**

(43) Veröffentlichungstag der Anmeldung:
**30.12.86 Patentblatt 86/52**

(45) Bekanntmachung des Hinweises auf die Patenterteilung:
**19.04.89 Patentblatt 89/16**

(84) Benannte Vertragsstaaten:
**AT BE CH DE FR GB IT LI NL SE**

(56) Entgegenhaltungen:
**US-A- 4 135 043**

(73) Patentinhaber: **BASF Aktiengesellschaft,
Carl-Bosch-Strasse 38, D-6700 Ludwigshafen(DE)**

(72) Erfinder: **Messmer, Karlheinz, Dr., Auf Kies 6,
D-6719 Weisenheim(DE)**
Erfinder: **Hennig, Karl, Beethovenstrasse 26,
D-6717 Hessheim(DE)**
Erfinder: **Denzinger, Walter, Wormser Landstrasse 65,
D-6720 Speyer(DE)**
Erfinder: **Hettche, Albert, Dr., Kleiststrasse 12,
D-6717 Hessheim(DE)**
Erfinder: **Trieselt, Wolfgang, Dr., Alwin-Mittasch-Platz 1,
D-6700 Ludwigshafen(DE)**
Erfinder: **Raubenheimer, Hans-Jürgen, Benzstrasse 6,
D-6834 Ketsch(DE)**

ACTORUM AG

**Beschreibung**

Aus der US-A 4 135 043 ist ein Verfahren zur Herstellung von pulverförmigen wasserlöslichen Polymerisaten bekannt, bei dem man wasserlösliche ethylenisch ungesättigte Monomere in einem Pulverbett in Gegenwart von wasserlöslichen Polymerisationsinitiatoren und Wasser als Hilfsflüssigkeit unter Aufrechterhaltung des Pulverzustands, Abführen der Polymerisationswärme durch Abdestillieren von Wasser und Umwälzung der Reaktionsmasse polymerisiert. Als wasserlösliche Polymerisationsinitiatoren werden dabei Wasserstoffperoxid oder Natrium- bzw. Kaliumperoxidisulfat verwendet. Polymerisiert man nach dem bekannten Verfahren ethylenisch ungesättigte Carbonsäuren, wie Acrylsäure oder Maleinsäure, so beobachtet man während der Polymerisation eine $CO_2$-Entwicklung. Man erhält dadurch Polymerisate, die pro Gewichtsteil Substanz weniger Carboxylgruppen enthalten als theoretisch möglich. Das Komplexierungsvermögen der so hergestellten Polymerisate gegenüber Kalzium- und Magnesiumionen ist daher noch verbesserungsbedürftig.

Der vorliegenden Erfindung liegt die Aufgabe zugrunde, ein Verfahren zur Herstellung von pulverförmigen, wasserlöslichen Polymerisaten durch Polymerisieren von wasserlöslichen ethylenisch ungesättigten Monomeren in einem Pulverbett in Gegenwart von Polymerisationsinitiatoren und Wasser unter Aufrechterhaltung des Pulverzustands, Abführen der Polymerisationswärme durch Abdestillieren von Wasser und Umwälzung der Reaktionsmasse zur Verfügung zu stellen, bei dem die Kohlendioxidbildung während der Polymerisation nicht in dem Maße eintritt, wie bei dem bekannten Verfahren.

Die Aufgabe wird erfindungsgemäß dadurch gelöst, daß man als Polymerisationsinitiatoren wasserunlösliche, bei 1013 mbar und Temperaturen von 20°C flüssige organische Peroxide allein oder in Mischung mit bis zu 50 Gew.-%, bezogen auf die Initiatormischung, an wasserlöslichen Azostartern und/oder wasserunlöslichen, bei 20°C festen, Peroxigruppen enthaltenden Verbindungen einsetzt.

Wasserlösliche ethylenisch ungesättigte Verbindungen sind beispielsweise $C_3$- bis $C_5$-Carbonsäuren, deren Amide oder Nitrile. Vorzugsweise polymerisiert man erfindungsgemäß Acrylsäure, Methacrylsäure, Itaconsäure oder Maleinsäure bzw. Maleinsäureanhydrid, aus dem sich in Gegenwart von Wasser Maleinsäure bildet. Besonders bevorzugt ist die Herstellung von Copolymerisaten aus Acrylsäure oder Methacrylsäure und Maleinsäure. Derartige Copolymerisate enthalten vorzugsweise 10 bis 70 Gew.-% Maleinsäure und 90 bis 30 Gew.-% Acrylsäure und/oder Methacrylsäure einpolymerisiert.

Die ethylenisch ungesättigten Carbonsäuren können in Form der freien Säuren sowie in partiell oder vollständig mit Basen neutralisierter Form der Polymerisation unterworfen werden. Die Neutralisation der Carboxylgruppen kann auch im Pulverbett erfolgen. Als Basen verwendet man z.B. Alkalilaugen, wie NaOH oder KOH, Erdalkalimetallhydroxyde, -oxide oder -carbonate, Ammoniak und/oder Amine.

Auch beim Polymerisieren von Acrylamid, Methacrylamid, Acrylnitril und Methacrylnitril unter Verwendung wasserlöslicher peroxidischer Polymerisationsinitiatoren beobachtet man eine Kohlendioxidentwicklung, wobei man Polymerisate mit einem niedrigeren Molekulargewicht erhält. Die $CO_2$-Entwicklung wird stark zurückgedrängt, wenn man Acrylamid, Methacrylamid, Acrylnitril und Methacrylnitril allein oder in Mischung miteinander bzw. mit den oben angegebenen Carbonsäuren mit Hilfe von wasserunlöslichen, flüssigen organischen Peroxiden allein oder in Mischung mit bis zu 50 Gew.-%, bezogen auf die Initiatormischung, an wasserlöslichen, organischen Azo- und/oder Peroxigruppen enthaltenden Verbindungen polymerisiert. Man erhält auf diese Weise beispielsweise Polymerisate des Acrylamids, die beispielsweise eine höhere Wirksamkeit als Flockungsmittel haben als Polyacrylamide, die in Gegenwart von wasserlöslichen Initiatoren in einem Pulverbett hergestellt werden.

Wasserlösliche Polymerisate werden auch dann erhalten, wenn man Mischungen aus

(a) ethylenisch ungesättigen $C_3$- bis $C_5$-Carbonsäuren und/oder deren Salzen,
(b) Acrylamid, Methacrylamid, Acrylnitril oder Methacrylnitril und gegebenenfalls
(c) einem $C_1$- bis $C_8$-Alkylester der Acrylsäure oder Methacrylsäure, Vinylacetat, Vinylpropionat, Styrol oder Diisobutylen

polymerisiert. Die Mengen an Monomeren (a) bis (c) werden dabei so gewählt, daß wasserlösliche Polymerisate entstehen. Als Alkylester der Acrylsäure oder Methacrylsäure kommen die Hydroxy-$C_2$ bis $C_4$-Alkyl(meth)acrylate oder die $C_1$- bis $C_3$-Alkylamino-$C_2$ bis $C_5$-Alkyl(meth)acrylate in Betracht. Außer den Estern einwertiger $C_1$- bis $C_8$-Alkohole der Acrylsäure oder Methacrylsäure eignen sich beispielsweise 2-Hydroxyethylacrylat, 2-Hydroxypropylacrylat, 4-Hydroxybutylacrylat, 4-Hydroxybutylmethacrylat, Dimethylaminoethylacrylat, Dimethylaminoethylmethacrylat, Diethylaminoethylacrylat, Diethylaminoethylmethacrylat und Dipropylaminoethylacrylat. Insbesondere für die Anwendung als Flockungsmittel verwendbare Copolymerisate erhält man, wenn man Acrylamid oder Methacrylamid mit einem Di-$C_1$- bis $C_3$-Alkylamino-$C_2$- bis $C_4$-alkyl(meth)acrylat copolymerisiert. Geeignete Dialkylaminoalkylester der Acrylsäure oder Methacrylsäure wurden oben bereits genannt. Diese Verbindungen können in jedem beliebigen Verhältnis mit Acrylamid oder Methacrylamid der Copolymerisation unterworfen werden.

Die Polymerisation wird in einem Pulverbett durchgeführt, indem man in einer Polymerisationsvorrichtung ein pulverförmiges Material vorlegt, das unter den Polymerisationsbedingungen nicht verändert wird. Als Pulver eignen sich sowohl anorganische als auch organische feinteilige Materialien, die unter den Reaktionsbedingungen nicht mit den Monomeren oder Polymeren reagieren. Geeignete pulverförmige anorganische Materialien sind beispielsweise Quarz, Talkum, Aluminiumoxid, Kochsalz oder Glasperlen. Vorzugsweise legt man jedoch in der Polymerisationszone ein inertes pulverförmiges Polymerisat vor, das der Zusammensetzung des sich aus dem Monomerengemisch bzw. dem zu polymerisierenden Monomeren neu bildenden Polymerisats entspricht. Diese Polymerisate werden – falls kein pulverförmiges Polymerisat zur Verfügung steht – nach bekannten Polymerisationstechniken hergestellt, z.B. durch Polymerisieren der Monomeren in Substanz und Zerkleinern des festen Polymerisats, durch Polymerisieren der Monomeren in einer Wasser-in-Öl-Emulsion und Ausfällen und Isolieren des gebildeten Polymerisats oder durch Fällungs- oder Perlpolymerisation. Der Teilchendurchmesser der pulverförmigen Materialien liegt zwischen 10 μm und 20 mm.

Als Polymerisationsvorrichtungen kommen beispielsweise Kessel, Rührautoklaven und horizontale Rohrreaktoren mit Mischwerk, gegebenenfalls alle als mehrstufige Kaskade, in Betracht. Außerdem eignen sich auch Kombinationen von Rührkesseln mit nachgeschaltetem Strömungsrohr.

Der Pulverzustand in der Polymerisationszone wird während der gesamten Polymerisationsdauer aufrechterhalten. Die wäßrige Lösung der Monomeren bzw. eine wäßrige Emulsion von Monomeren, die sich nicht oder nur schlecht in Wasser lösen, wie Styrol oder Diisobutylen, wird vorzugsweise in feiner Verteilung auf das Pulver in der Polymerisationszone aufgebracht. Dieser Verfahrensschritt geschieht in der Regel durch Versprühen der Monomerenlösung bzw. -emulsion, entweder auf das Pulverbett oder auch direkt im Pulverbett. Die Monomeren werden in dem Maße in die Polymerisationszone eingebracht, in dem sie auch polymerisieren. Dies kann entweder kontinuierlich oder absatzweise erfolgen. Während der Polymerisation ist für eine ausreichende Umwälzung der Reaktionsmasse zu sorgen. Die Mischung wird vorzugsweise gerührt. Die bei der Polymerisation entstehende Wärme sowie die durch Umwälzung des Pulvers entstehende wird durch kontinuierliches Verdampfen des Wassers bzw. des Hilfslösemittels aus der Reaktionszone entfernt. Vorzugsweise wird die Konzentration der Monomeren in Wasser so gewählt, daß bei vollständiger Polymerisation der Monomeren die freigesetzte Polymerisationsenthalpie gerade ausreicht, um das Wasser unter den herrschenden Reaktionsbedingungen durch Verdampfen fast vollständig aus der Polymerisationszone zu entfernen. Die Konzentration der Monomeren in Wasser liegt vorzugsweise in dem Bereich von 45 bis 65 Gew.-%.

Die Polymerisation erfolgt erfindungsgemäß in Gegenwart von wasserunlöslichen, bei Temperaturen von 20°C flüssigen organischen Peroxiden allein oder in Mischung mit bis zu 50 Gew.-%, bezogen auf die Initiatormischung, an wasserlöslichen, organischen Azostartern und/oder bei 20°C festen, Peroxigruppen enthaltenden Verbindungen, die bei 1013 mbar und einer Temperatur von 23°C in Wasser unlöslich sind bzw. sich darin unter den angegebenen Bedingungen zu höchstens 1 Gew.-% lösen.

Die in Betracht kommenden, bei Temperaturen von 20°C flüssigen organischen Peroxide sind in Wasser bei 20°C und 1013 mbar unlöslich bzw. haben eine Löslichkeit in Wasser von höchstens 1 Gew.-% (gemessen bei 23°C und 1013 mbar). Geeignete Peroxide dieser Art sind beispielsweise Di-2-ethylhexyl-peroxidicarbonat, tert.-Butyl-per-2-ethylhexanoat, tert.-Butyl-per-isononanoat, tert.-Butylperbenzoat, tert.-Butyl-cumyl-peroxid, Di-tert.-butylperoxid, Cumolhydroperoxid und/oder tert.-Butylhydroperoxid. Die genannten Peroxide werden vorzugsweise allein eingesetzt oder in Mischung mit bis zu 50 Gew.-%, bezogen auf die Mischung an Initiatoren, an wasserlöslichen, organischen Azo- und/oder wasserunlöslichen, bei 20°C festen, Peroxigruppen enthaltenden Verbindungen. Bei den wasserlöslichen organischen Azostartern handelt es sich beispielsweise um 2,2'-Azo-bis-(2-amidinopropan)hydrochlorid und 4,4'-Azo-bis(4-cyanovaleriansäure).

Die wasserunlöslichen, bei 20°C festen Polymerisationsinitiatoren können beispielsweise in polaren Lösemitteln wie Methanol, Ethanol, Isopropanol oder Aceton gelöst und in dieser Form separat von den zu polymerisierenden Monomeren in die Polymerisationszone eingeführt werden. Geeignete wasserunlösliche bei 20°C feste organische Perverbindungen sind beispielsweise Acetyl-cyclohexansulfonylperoxid, Dioctanoylperoxid, Didecanoylperoxid, Dilauroylperoxid, Bis(2-methylbenzoyl)peroxid, Dibenzoylperoxid, Bis(4-chlorbenzoyl)peroxid, Dicyclohexyl-peroxydicarbonat, Bis(4-t-butylcyclohexyl)-peroxydicarbonat, Dimyristyl-peroxidicarbonat, Dicetyl-peroxidicarbonat, 2,5-Dimethylhexan-2,5-diperbenzoat, Dicumylperoxid und Cyclohexanonperoxid. Man kann beispielsweise an nicht wassermischbaren Initiatoren Lösungen von Dioctanoylperoxid in Methanol, Lösungen von Dicyclohexylperoxidicarbonat in einer Mischung aus Methanol und Isopropanol oder Dicumylperoxid in einer Mischung aus Methanol und Aceton verwenden. Die Konzentration an wasserunlöslichen, festen organischen Peroxiden oder Hydroperoxiden in den mit Wasser mischbaren organischen Lösemitteln liegt zwischen 5 und 55 Gew.-%, bezogen auf die Lösung.

Die Polymerisation der Monomeren kann, je nach Reaktivität der Monomeren und der Halbwertszeit des wasserunlöslichen flüssigen organischen Peroxides, in einem weiten Temperaturbereich durchgeführt werden, z.B. bei 50 bis 220°C. Hierbei ist allerdings darauf zu achten, daß der Pulverzustand während der Polymerisation aufrechterhalten wird, d.h., daß die Temperatur bei der Polymerisation mindestens 10°C unterhalb des Schmelzpunkts bzw. des beginnenden Erweichungsbereiches des jeweils herzustellenden Polymerisats liegt, so daß die Polymerteilchen nicht miteinander verkleben. Außerdem wird durch Einstellen des Drucks dafür gesorgt, daß bei der vorgegebenen Temperatur Wasser und gegebenenfalls als Hilfslösemittel verwendete organische Lösemittel aus der Polymerisationszone verdampfen.

Die Polymerisation kann bei Normaldruck, im Vakuum oder auch unter erhöhtem Druck, z.B. bis 25 bar durchgeführt werden. Die Polymerisation kann diskontinuierlich oder kontinuierlich ablaufen, wobei man als Behälter für die Reaktionszone in beiden Fällen Rührkessel oder horizontale Rohrreaktoren mit Mischwerken aller Art verwenden kann. Die Polymerisationsinitiatoren können zusammen mit der wäßrigen Lösung der Monomeren oder auch getrennt davon in die Polymerisationszone eingeführt werden.

Um das Molekulargewicht der Polymerisate zu beeinflussen, kann man in Gegenwart der üblichen Polymerisationsregler polymerisieren. Als Polymerisationsregler eignen sich beispielsweise Thiocarbonsäuren, wie Thioglykolsäure, Thiomilchsäure, 3-Mercaptopropionsäure, 2-Mercaptobuttersäure, 3-Mercaptobernsteinsäure, Enolether, 2-Mercaptoethanol und Mercaptopropanol, sowie Übergangsmetall-Acetylacetonate wie Mangan-III-acetylacetonat. Die Polymerisationsregler werden in einer Menge von 0,01 bis 15 Gew.-%, bezogen auf die Monomeren eingesetzt, während die wasserunlöslichen, flüssigen organischen Peroxide in sonst bei Polymerisationen üblicher Menge d.h. von 0,01 bis 15, vorzugsweise 0,2 bis 10 Gew.-%, bezogen auf die Monomeren, angewendet werden.

Nach dem erfindungsgemäßen Verfahren erhält man je nach Einsatz von Monomeren Homopolymerisate oder Copolymerisate in Form eines Pulvers, deren Teilchendurchmesser zwischen 10 μm und 20 mm, vorzugsweise 0,1 bis 5 mm beträgt. Die Polymerisate sind wasserlöslich und haben gegenüber vergleichbaren Polymerisaten, die in Gegenwart bekannter wasserlöslicher Polymerisationsinitiatoren hergestellt werden, ein höheres Molekulargewicht. Während der Polymerisation wird die $CO_2$-Entwicklung stark reduziert bzw. vermieden. Dadurch erhält man gegenüber den bekannten Verfahren eine Erhöhung der Ausbeute bei der Polymerisation und außerdem eine Steigerung der Wirksamkeit der Polymerisate, z.B. bei der Anwendung als Flockungsmittel bzw. als Komplexbildungsmittel oder Inkrustierungsinhibitor in Waschmitteln und als Textilschlichtemittel.

Die nach dem erfindungsgemäßen Verfahren hergestellten Carboxylgruppen enthaltenden Homo- und Copolymerisate werden, in Mischung mit Stärke als Schlichtehilfsmittel beim Weben von Baumwoll- bzw. Baumwoll-Polyestergarnen, als Inkrustierungsinhibitoren in Waschmitteln und als Komplexbildner für Magnesium- und Kalziumionen verwendet. Die Polyacrylamide werden als Flockungsmittel zum Klären von Abwässern und Schlämmen sowie bei der Herstellung von Papier als Verfestigungsmittel (Zusatz zum Papierstoff) verwendet.

Die in den Beispielen angegebenen Teile sind Gewichtsteile, die Angaben in Prozent beziehen sich auf das Gewicht der Stoffe, sofern nichts anderes angegeben ist. Die K-Werte wurden nach H. Fiktenscher, Cellulose-Chemie <u>13</u>, 48 bis 64 und 71 bis 74 (1932) in 1%iger wäßriger Lösung bei einer Temperatur von 25°C gemessen; dabei bedeutet $K = k \cdot 10^3$.

Als Polymerisationsreaktor diente ein zylindrisches Glasgefäß von 8,5 l Inhalt, das mit einem Wendelrührer und mit einem absteigenden Kühler ausgestattet war. In das Glasgefäß mündete eine Sprühdüse, durch die die Monomeren, das Siedehilfsmittel und der Initiator auf vorgelegtes Polyamidgranulat aufgesprüht wurde. In den Reaktor mündete außerdem eine Stickstoffleitung, um die Polymerisation unter Stickstoffatmosphäre durchzuführen. Die Beheizung des Polymerisationsgefäßes erfolgte mit Hilfe eines Ölbades. Die Monomerenlösung wurde mit dem wasserunlöslichen flüssigen Peroxid bzw. einer Mischung daraus und einer Lösung eines wasserlöslichen Polymerisationsinitiators in einem statischen Mischer gemischt. In der Leitung, durch die Monomerenlösung zum statischen Mischer geführt wurde, war ein Wärmeaustauscher eingebaut, so daß bei Bedarf gekühlt werden konnte. Zwischen Polymerisationsgefäß und absteigendem Kühler ist ein Abscheider angeordnet, um eventuell durch den Stickstoffstrom bzw. das verdampfende Siedehilfsmittel mitgerissene Feststoffe abzuscheiden. Der Polymerisationsreaktor war zur Kontrolle der Guttemperatur mit einer in das Gut reichenden Temperaturmeßsonde ausgerüstet. Zur gleichzeitigen Durchführung von Polymerisation und Neutralisation im Reaktor wurde dieser entweder mit einer Feststoffdosiervorrichtung, beispielsweise einer Dosierschnecke, verbunden, über die pulverförmiges Neutralisierungsmittel in den Reaktor dosiert wurde. In einer anderen Ausführungsform mündete in das Glasgefäß eine zweite Sprühdüse, durch die das flüssige Neutralisiermittel ebenfalls auf das vorgelegte Granulat aufgesprüht wurde.

In der oben beschriebenen Vorrichtung wurden 1500 g eines granulierten Polyamids aus Adipinsäure und Hexamethylendiamin mit einem Korndurchmesser von 1,5 bis 3,5 mm vorgelegt und unter intensiver Umwälzung auf die jeweils in den folgenden Beispielen angegebene Reaktionstemperatur erwärmt.

<u>Beispiel 1</u>

Eine Mischung aus 720 g Acrylsäure und 260 g Maleinsäureanhydrid wird in einem statischen Mischer mit einer Initiatorlösung aus 82 g tert.-Butylperisononanoat in 125 ml Methanol zusammengeführt und im Verlauf von 4 Stunden sukzessive auf das bewegte Feststoffbett aus 1500 g pulverförmigem Polyamid aufgesprüht. Gleichzeitig wird eine Lösung von 580 g Natriumhydroxid in 390 g Wasser, die eine Temperatur von 80°C hat, ebenfalls im Verlauf von 4 Stunden gleichmäßig auf die intensiv bewegte Oberfläche des gerührten Pulverbetts aufgesprüht. Der Reaktionsdruck beträgt 1,2 bar. Die Polymerisationstemperatur wird durch Zugabe von Wasser in das Pulverbett auf 135°C konstant gehalten. Während der Polymerisation und der synchron ablaufenden Neutralisation wird der Pulverzustand in der Polymerisationszone aufrechterhalten und das zugeführte Wasser zusammen mit dem bei der Neutralisation freigesetzten Wasser und dem eingebrachten Methanol kontinuierlich abdestilliert. Anschließend wird zur Absenkung des Restmonomergehaltes das Festbett unter Durchmischen 2 Stunden auf einer Temperatur von 140°C gehalten. Der Reaktorinhalt wird danach in einer Kugelmühle ca. 10 Stunden schonend gemahlen und das Copolymerisat aus Acrylsäure und Maleinsäure von vorgelegtem Polyamid getrennt. Nach dem Sieben erhält man ein Copolymerisat aus Acrylsäure und Maleinsäureanhydrid in Form des Natriumsalzes (Neutralisationsgrad 95%), das einen K-Wert von 39,2 und eine Teilchengröße von 1 bis 2 mm hat. Das Copolymerisat wird als Inkrustationsinhibitor in Waschmitteln verwendet.

### Beispiel 2

Eine Lösung aus 896 g Acrylamid und 224 g Diethylaminoethylacrylat in 480 g Wasser wird in einem statischen Mischer mit 160 g t-Butylperisononanoat zusammengeführt und im Verlauf von 4 Stunden sukzessive auf das in der oben beschriebenen Polymerisationsapparatur befindliche bewegte Pulverbett aus 1500 g Polyamid aufgesprüht. Die Polymerisationstemperatur wird auf 140°C eingestellt und durch Wasserzufuhr konstant gehalten. Der Druck beträgt 1 bar. Während der Polymerisation wird der Pulverzustand in der Polymerisationszone aufrechterhalten und das über die Monomerenlösung sowie zur Temperaturregelung zugeführte Wasser kontinuierlich abdestilliert. Nach Zugabe der Monomeren und des Polymerisationsinitiators wird das Reaktionsgemisch eine Stunde bei 140°C gehalten. Der Reaktorinhalt wird dann in einer Kugelmühle ca. 10 Stunden schonend gemahlen und das Copolymerisat aus Acrylsäure und Diethylaminoethylacrylat, das einen K-Wert von 110, einen Restmonomerengehalt von weniger als 1,5% und eine Teilchengröße von 0,5 bis 2 mm hat, vom vorgelegten Polyamidgranulat abgetrennt.

Das Copolymerisat aus Acrylamid und Diethylaminoethylacrylat wird als Verfestiger für Papier verwendet, wobei man das Copolymerisat dem Papierstoff vor der Blattbildung in Mengen von 0,3 bis 2 Gew.-%, bezogen auf trockenen Faserstoff, zusetzt.

### Beispiel 3

In der oben beschriebenen Polymerisationsapparatur wird eine Lösung von 909,1 g Acrylsäure in 307,8 g Wasser in einem statischen Mischer mit einer Mischung aus 24,8 g t-Butyl-perbenzoat und 55,1 g t-Butyl-per-2-ethylhexanoat zusammengeführt und im Verlauf von 3 Stunden sukzessive auf das bewegte Feststoffbett aus pulverförmigem Polyamid aufgesprüht. Gleichzeitig wird eine Lösung von 408 g Natriumhydroxid in 408 g Wasser bei einer Temperatur der Lösung von 80°C ebenfalls im Verlauf von 3 Stunden gleichmäßig auf die intensiv bewegte Oberfläche des gerührten Feststoffbetts aufgesprüht. Die Polymerisationstemperatur beträgt 130°C. Im Reaktor wird ein Druck von 1,35 bar durch Aufpressen von Stickstoff eingestellt. Der Druck wird durch ein im Anschluß an den absteigenden Kühler eingebautes Druckregelventil konstant gehalten. Während der Polymerisation wird der Pulverzustand der Reaktionsmischung aufrechterhalten und das zugeführte Wasser zusammen mit dem aus der Neutralisation freiwerdenden Wasser kontinuierlich abdestilliert. Die Kondensatmenge beträgt 840 g. Anschließend wird zur Erniedrigung des Restmonomerengehaltes das bewegte Feststoffbett weitere 4 Stunden bei einer Temperatur von 130°C unter einem Druck von 1,35 bar gehalten.

Danach kühlt man den Reaktorinhalt ab und mahlt ihn ca. 10 Stunden lang in einer Kugelmühle. Das gebildete partiell neutralisierte Polynatriumacrylat (Neutralisationsgrad ca. 80%) trennt sich dadurch vom Polyamidgranulat und kann durch Sieben isoliert werden. Die zu 80% neutralisierte Polyacrylsäure hat einen Restmonomerengehalt von weniger als 1%, enthält weniger als 1% Quellkörper und hat einen K-Wert von 125,6. Das so hergestellte Polymerisat wird in Abmischung mit Stärke (2 Teile Stärke und 1 Teil Natriumpolyacrylat) in 12 bis 15%iger wäßriger Lösung als Textilschlichte verwendet.

### Beispiel 4

Eine Lösung von 14,4 kg Acrylsäure und 5,2 kg Maleinsäureanhydrid wird in einem statischen Mischer mit 1,6 kg t-Butylperisononanoat zusammengeführt und im Verlauf von 4 Stunden gleichmäßig auf ein bewegtes Feststoffbett aus 18 kg pulverförmigem Polyamid aufgesprüht (Reaktorgröße: 40 l). Gleichzeitig wird eine Lösung von 11,6 kg Natriumhydroxid in 7,8 kg Wasser bei einer Lösungstemperatur von 80°C ebenfalls im Verlauf von 4 Stunden gleichmäßig auf die intensiv bewegte Oberfläche des gerührten Feststoffbettes aufgesprüht. Das Gewichtsverhältnis der entstehenden Polynatriumsalze aus Acrylsäure und Maleinsäure liegt etwa bei 70:30. Die durch sukzessive Zufuhr von Wasser aufrechterhaltene Reaktionstemperatur beträgt 135°C. Der Reaktionsdruck liegt bei 1,2 bar. Während der Polymerisation und der synchron ablaufenden Neutralisation wird der Pulverzustand in der Polymerisationszone aufrechterhalten und das über die Natronlauge sowie zur Temperaturhaltung zugeführte Wasser zusammen mit dem durch Neutralisation entstandenen Wasser kontinuierlich aus der Reaktionszone abdestilliert. Anschließend wird zur Absenkung des Restmonomerengehaltes das weiterhin bewegte Feststoffbett über weitere 2 Stunden auf einer Temperatur von 140°C gehalten.

Nach der Abtrennung des neugebildeten Copolymerisates vom vorgelegten Polyamid erhält man ein Copolymerisat vom K-Wert 37 bei einem Neutralisationsgrad von 95% und einem Restmonomerengehalt von weniger als 1%.

Vergleichsbeispiel

Ersetzt man in Beispiel 4 die 1,6 kg t-Butylperisononanoat durch 3,2 kg $H_2O_2$ als 50%ige Zubereitung – entsprechend 1,6 kg $H_2O_2$ – verfährt ansonsten in gleicher Weise, so erhält man ein Copolymerisat vom K-Wert 18 mit einem Restmonomerengehalt von unter 1% und einem Neutralisationsgrad von über 100%.

| | Beispiel 4 | Vergleichs-beispiel |
|---|---|---|
| Einsatzstoffe: | | |
| Acrylsäure in kg | 14,4 | 14,4 |
| Maleinsäureanhydrid in kg | 5,2 | 5,2 |
| NaOH in kg | 11,6 | 11,6 |
| Initiator | 1,6 | 1,6 |
| Produkt: | | |
| K-Wert (1%ige Lösung in $H_2O$ bei 20°C) | 37 | 18 |
| Restmonomere in % | <1 | <1 |
| pH-Wert (2%ige Lösung in $H_2O$) | 6,8 | 10,3 |
| Neutralisationsgrad in % | ~95 | >100 |
| $CO_2$-Entwicklung in %, bezogen auf Monomere, während der Polymerisation | 0,2 | 6,8 |

Aus der Tabelle ist ersichtlich, daß unter gleichen Bedingungen durch die erfindungsgemäße Verwendung von t-Butylperisononanoat anstatt $H_2O_2$ als Initiator aufgrund der geringeren $CO_2$-Entwicklung ein Copolymerisat in größerer Ausbeute erhalten wird.

Zum Nachweis der Wirksamkeit der Polymerisate und zum Vergleich mit dem Stand der Technik bei konventionell hergestellten Inkrustationsinhibitoren auf Basis von Acrylsäure und Maleinsäure wurden jeweils Serien von 20 Wäschen im Launder-O-meter vorgenommen und die Veränderungen im Aschegehalt als Maß für die Wirksamkeit der Inkrustationsinhibierung herangezogen.

Prüfbedingungen:

Flotte: 250 ml

Flottenverhältnis: 1:12,5

Wasserhärte: 22°d (8,5 Ca:1,5 Mg)

Dauer: 45 Minuten

Temperatur: 40°C bis 95°C (Temperaturprogramm)

Prüfgewebe: je 10 g Baumwollnessel + 10 g Frottee

Waschmittel: 8 g/l (orthophosphathaltig)

Inkrustations-Inhibitorzusatz: 2 Gew.-%

| Ergebnisse | | Aschegehalt in % | |
|---|---|---|---|
| Nr. | Inkrustationsinhibitor | Baumwollnessel | Frottee |
| 1 | ohne | 2,54 | 6,38 |
| 2 | Vergleichsinkrustationsinhibition[1] | 0,33 | 0,35 |
| 3 | Copolymerisat gemäß Vergleichsbeispiel | 0,26 | 0,23 |
| 4 | Copolymerisat gemäß Beispiel | 0,13 | 0,17 |

[1] Stand der Technik bei Inkrustationsinhibitoren bei konventioneller Herstellung der Copolymerisate auf Basis von Acrylsäure und Maleinsäure.

Die in der Tabelle zusammengestellten Prüfergebnisse zeigen, daß die nach dem erfindungsgemäßen Verfahren hergestellten Produkte auf Basis von Acrylsäure und Maleinsäure den nach bekannten Standardverfahren hergestellten hinsichtlich der Inkrustationsinhibierung überlegen sind.

# EP 0 205 910 B1

## Patentansprüche

1. Verfahren zur Herstellung von pulverförmigen, wasserlöslichen Polymerisaten durch Polymerisieren von wasserlöslichen ethylenisch ungesättigten Monomeren in einem Pulverbett in Gegenwart von Polymerisationsinitiatoren und Wasser unter Aufrechterhaltung des Pulverzustands, Abführen der Polymerisationswärme durch Abdestillieren von Wasser und Umwälzung der Reaktionsmasse, dadurch gekennzeichnet, daß man als Polymerisationsinitiatoren wasserunlösliche, bei 1013 mbar und Temperaturen von 20°C flüssige organische Peroxide allein oder in Mischung mit bis zu 50 Gew.-%, bezogen auf die Initiatormischung, an wasserlöslichen Azostartern und/oder wasserunlöslichen, bei 20°C festen, Peroxigruppen enthaltenden Verbindungen einsetzt.

2. Verfahren nach Anspruch 1, dadurch gekennzeichnet, daß man Initiatormischungen einsetzt, die ein wasserunlösliches, bei 1013 mbar und Temperaturen von 20°C flüssiges organisches Peroxid und bis zu 50 Gew.-%, bezogen auf die Initiatormischung, eines wasserunlöslichen, bei 1013 mbar und 20°C festen organischen Peroxids oder Hydroperoxids in einem mit Wasser mischbaren Lösungsmittel gelöst enthalten.

3. Verfahren nach Anspruch 1, dadurch gekennzeichnet, daß man ethylenisch ungesättigte $C_3$- bis $C_5$-Carbonsäuren deren Amide und/oder Nitrile polymerisiert.

4. Verfahren nach Anspruch 1, dadurch gekennzeichnet, daß man als wasserlösliche ethylenisch ungesättigte Monomere Acrylsäure, Methacrylsäure, Itaconsäure oder Maleinsäure polymerisiert.

5. Verfahren nach Anspruch 1, dadurch gekennzeichnet, daß man Acrylsäure mit Maleinsäure copolymerisiert.

6. Verfahren nach Anspruch 1, dadurch gekennzeichnet, daß man Mischungen aus
(a) ethylenisch ungesättigten $C_3$- bis $C_5$-Carbonsäuren und/oder deren Salzen,
(b) Acrylamid, Methacrylamid, Acrylnitril oder Methacrylnitril und gegebenenfalls
(c) einen $C_1$- bis $C_8$-Alkylester der Acrylsäure oder Methacrylsäure, Vinylacetat, Vinylpropionat, Styrol oder Diisobutylen polymerisiert.

7. Verfahren nach den Ansprüchen 1 bis 5, dadurch gekennzeichnet, daß man als Polymerisationsinitiatoren wasserunlösliche, bei Temperaturen von 20°C flüssige organische Peroxide einsetzt.

8. Verfahren nach den Ansprüchen 1 bis 5, dadurch gekennzeichnet, daß man
Di-2-ethylhexyl-peroxidicarbonat,
tert.-Butyl-per-2-ethylhexanoat,
tert.-Butyl-per-isononanoat,
tert.-Butylperbenzoat,
tert.-Butyl-cumyl-peroxid,
Di-tert.-butylperoxid,
Cumolhydroperoxid und/oder
tert.-Butylhydroperoxid
als wasserunlösliche, flüssige Polymerisationsinitiatoren einsetzt.

9. Verwendung der nach den Ansprüchen 1 bis 8 hergestellten Polymerisate als Inkrustationsinhibitoren in Waschmitteln, als Textilschlichtemittel oder als Papierhilfsmittel.

## Claims

1. A process for the preparation of a water-soluble polymer powder by polymerizing water-soluble ethylenically unsaturated monomers in a powder bed in the presence of polymerization initiators and water while maintaining the powder state, removing the heat of polymerization by distilling off water, and circulating the reaction mixture, wherein the polymerization initiators used are water-soluble organic peroxides which are liquid under 1013 mbar and at 20°C, alone or in a mixture with up to 50% by weight, based on the initiator mixture, of water-soluble azo initiators and/or water-insoluble peroxy-containing compounds which are solid at 20°C.

2. A process as claimed in claim 1, wherein the initiator mixture used contains a water-insoluble organic peroxide which is liquid under 1013 mbar and at 20°C and up to 50% by weight, based on the initiator mixture, of a water-insoluble organic peroxide or hydroperoxide which is solid under 1013 mbar and at 20°C, dissolved in a water-miscible solvent.

3. A process as claimed in claim 1, wherein ethylenically unsaturated $C_3$–$C_5$-carboxylic acids, their amides and/or their nitriles are polymerized.

4. A process as claimed in claim 1, wherein acrylic acid, methacrylic acid, itaconic acid or maleic acid is polymerized as the water-soluble ethylenically unsaturated monomer.

5. A process as claimed in claim 1, wherein acrylic acid is copolymerized with maleic acid.

6. A process as claimed in claim 1, wherein a mixture of
(a) ethylenically unsaturated $C_3$–$C_5$-carboxylic acids and/or their salts,
(b) acrylamide, methacrylamide, acrylonitrile or methacrylonitrile and, if desired,
(c) a $C_1$–$C_8$-alkyl ester of acrylic acid or methacrylic acid, vinyl acetate, vinyl propionate, styrene or diisobutylene is polymerized.

7

7. A process as claimed in any of claims 1 to 5, wherein water-insoluble organic peroxides which are liquid at 20°C are used as polymerization initiators.

8. A process as claimed in any of claims 1 to 5, wherein di-2-ethylhexyl peroxydicarbonate, tert-butyl per-2-ethylhexanoate, tert-butyl perisononanoate, tert-butyl perbenzoate, tert-butyl cumyl peroxide, di-tert-butyl peroxide, cumene hydroeroxide and/or tert-butyl hydroperoxide are used as water-insoluble, liquid polymerization initiators.

9. Use of the polymer prepared as claimed in any of claims 1 to 8 as an incrustation inhibitor in a detergent, as a textile sizing agent or as a paper additive.

**Revendications**

1. Procédé de préparation de polymères pulvérulents hydrosolubles par polymérisation de monomères à insaturation éthylénique hydrosolubles en présence d'amorceurs de la polymérisation et d'eau dans un lit pulvérulent, dont on maintient l'état pulvérulent, élimination de la chaleur de polymérisation par élimination de l'eau par distillation et agitation de la masse réactionnelle, caractérisé en ce que l'on utilise comme amorceurs de la polymérisation des peroxydes organiques insolubles dans l'eau, liquides à 20°C sous 1013 millibars, soit seuls, soit en mélange avec jusqu'à 50% du poids du mélange d'initiateurs d'amorceurs azoïques solubles dans l'eau et(ou) de composés à groupes peroxy insolubles dans l'eau et solides à 20°C.

2. Procédé suivant la revendication 1, caractérisé en ce que l'on met en œuvre des mélanges d'amorceurs, contenant un peroxyde organique insoluble dans l'eau, liquide à 20°C sous 1013 millibars, et jusqu'à 50% du poids du mélange d'un peroxyde ou d'un hydroperoxyde organique insoluble dans l'eau, solide à 20°C sous 1013 millibars, dissous dans un solvant miscible à l'eau.

3. Procédé suivant la revendication 1, caractérisé en ce que l'on polymérise des acides carboxyliques en $C_3$ à $C_5$ à insaturation éthylénique ou des amides et(ou) des nitriles de ces acides.

4. Procédé suivant la revendication 1, caractérisé en ce que le monomère à insaturation éthylénique hydrosoluble à polymériser est l'acide acrylique, l'acide méthacrylique, l'acide itaconique ou l'acide maléique.

5. Procédé suivant la revendication 1, caractérisé en ce que l'on copolymérise l'acide acrylique avec l'acide maléique.

6. Procédé suivant la revendication 1, caractérisé en ce que l'on polymérise des mélanges composés
(a) d'acides carboxyliques en $C_3$ à $C_5$ à insaturation éthylénique et(ou) des sels de ces acides,
(b) d'amide acrylique, d'amide méthacrylique, de nitrile acrylique ou de nitrile méthacrylique, ainsi qu'éventuellement
(c) d'un ester d'alkyle en $C_1$ à $C_8$ de l'acide acrylique ou de l'acide méthacrylique, d'acétate de vinyle, de propionate de vinyle, de styrène ou de diisobutylène.

7. Procédé suivant les revendications 1 à 5, caractérisé en ce que les amorceurs de la polymérisation sont des peroxydes organiques insolubles dans l'eau, liquides à 20°C.

8. Procédé suivant les revendications 1 à 5, caractérisé en ce que les amorceurs de la polymérisation liquides, insolubles dans l'eau, sont choisis parmi
le peroxydicarbonate de di-2-éthyl-hexyle,
le per-2-éthyl-hexanoate de butyle tertiaire,
le per-isononanoate de butyle tertiaire,
le per-benzoate de butyle tertiaire,
le peroxyde de tert.-butyl-cumyle,
le peroxyde de di-butyle tertiaire,
l'hydroperoxyde de butyle tertiaire et(ou)
l'hydroperoxyde de cumyle.

9. Utilisation des polymères préparés (par le procédé) suivant les revendications 1 à 8 comme inhibiteurs de la formation d'incrustations dans des détergents, comme agents d'apprêtage de matières textiles ou comme additifs dans l'industrie papetière.